# EUROPEAN PATENT SPECIFICATION

(11) **EP 4 084 283 B1**
(45) Date of publication and mention of the grant of the patent: **07.01.2026**
(21) Application number: 21170584.3
(22) Date of filing: 27.04.2021
(51) Int. Cl.: H02J 50/12, H02M 1/00, H02M 1/44, H02M 7/48

(54) **WIRELESS POWER TRANSMISSION DEVICE FOR INDUCTIVE ELECTRIC POWER TRANSMISSION AND METHOD FOR OPERATING THE POWER TRANSMISSION DEVICE FOR SUPPORTING ZERO-VOLTAGE SWITCHING**
DRAHTLOSE LEISTUNGSÜBERTRAGUNGSVORRICHTUNG FÜR INDUKTIVE ELEKTRISCHE LEISTUNGSÜBERTRAGUNG UND VERFAHREN ZUM BETRIEB DER LEISTUNGSÜBERTRAGUNGSVORRICHTUNG ZUM UNTERSTÜTZEN DER NULLSPANNUNGSSCHALTUNG
DISPOSITIF DE TRANSMISSION DE PUISSANCE SANS FIL POUR LA TRANSMISSION DE PUISSANCE ÉLECTRIQUE INDUCTIVE ET PROCÉDÉ DE FONCTIONNEMENT DU DISPOSITIF DE TRANSMISSION DE PUISSANCE POUR PRENDRE EN CHARGE LA COMMUTATION À TENSION NULLE

(43) Date of publication of application: 02.11.2022
(73) Proprietor: PULS GmbH, 81925 München (DE)
(72) Inventor: Springett, Nigel, 79312 Emmendingen (DE)
(74) Representative: Hofstetter, Schurack & Partner

(56) References cited:
- EP-A1- 3 451 493
- EP-A1- 3 599 700
- CN-A- 109 314 406
- DE-A1- 102018 206 388
- RU-C2- 2 553 660
- US-A1- 2017 054 379
- STEIGERWALD R L: "A review of soft-switching techniques in high performance DC power supplies", INDUSTRIAL ELECTRONICS, CONTROL, AND INSTRUMENTATION, 1995., PROCEEDIN GS OF THE 1995 IEEE IECON 21ST INTERNATIONAL CONFERENCE ON ORLANDO, FL, USA 6-10 NOV. 1995, NEW YORK, NY, USA,IEEE, US, vol. 1, 6 November 1995 (1995-11-06), pages 1 - 7, XP010154768, ISBN: 978-0-7803-3026-9, DOI: 10.1109/IECON.1995.483324

## Description

The invention is concerned with a method for operating an inverter circuit in a wireless power transmission device. The inverter circuit comprises at least one half-bridge with two switching units that each have a parasitic capacitance that needs to be considered for achieving the so-called zero-volt switching or zero-voltage switching, ZVS. The invention is also concerned with a wireless power transmission device that is designed to be operated according to the inventive method.

Wireless, inductive power transmission systems have huge advantages over cable connected systems. Due to technological advancements, such wireless charging systems for mobile batteries gain more and more attention. For example, charging stations for mobile batteries of mobile robots or forklift trucks or floor conveyors or electric vehicles can be charged using such inductive power transmission systems without the need to connect a charging cable.

In general, inductive power transmission systems consist of a stationary and a mobile side. In this description, the stationary side is also termed "wireless power transmission device" and "primary side". The stationary side has a switched mode electronic inverter circuit and -connected to this inverter circuit as a load- a resonant circuit consisting of at least one capacitor and a transmission coil (sending coil). On the mobile side, a voltage and current are induced in a receiving coil and a belonging resonant circuit. Further on the mobile side, a passive or active rectifier feeds directly a battery or a mobile energy system which consists of several loads (e.g. DC/DC-converter) and energy storage devices (e.g. Batteries, Supercaps, Ultracaps).

The cables leading from the inverter circuit to the transmission coils systems are switched at the power transfer frequency, carry significant voltage and power. On the primary side a resonant commutation of the load current is desired in the inverter circuit in order to reduce switching losses and EMI (electro-magnetic interference). To keep EMI and losses low, resonant power transfer is used. However, some of the key resonant components vary with coil alignment (transmission and receiving coils), spacing of coils, output voltage and current. Keeping the operating power transfer frequency within a small range becomes very difficult. It has been found that failing to operate the resonant arrangement comprising the primary side and the secondary side may lead to increased heat development in the inverter circuit and also to increased EMI when the power transfer frequency does not match the resonant frequency of the resonant arrangement.

Document EP 3 599 700 B1 discloses a wireless power transmission system to which the invention may be applied.

Documents EP 3 451 493 A1 and RU 2 553 660 C2 each disclose inverter circuits that provide zero volt switching capabilities by providing an additional support circuit.

It is an objective of the present invention to reduce power losses and EMI in a primary side wireless, inductive power transmission device.

The objective is accomplished by the subject matter of the independent claims. Advantageous developments with convenient and non-trivial further embodiments of the invention are specified in the following description, the dependent claims and the figures.

According to a first aspect the invention provides a method for operating an inverter circuit in a wireless power transmission device. The method is based on the following known design of the wireless, inductive power transmission device, i.e. the stationary or primary side of a wireless power transmission system. The inverter circuit comprises at least one half-bridge with two switching units that each have a parasitic capacitance and that each comprise a freewheeling element. Each switching unit may comprise at least one switching element, In particular, such a switching element may be provided in the form of a transistor or a thyristor. In the case of several such switching elements, some or all of these switching elements may be connected in parallel (for carrying more electric current). Some or all of these switching elements may be connected in series (for switching higher voltages). In the respective half-bridge the first switching unit links a plus terminal or plus potential of a DC source (DC - direct current) to a half-bridge node or output node of the half-bridge. The second switching unit links this half-bridge node to a minus terminal or minus potential of the DC source. In other words, in each half-bridge the switching units are connected in series and they interconnect the plus potential and the minus potential of the DC source. Such a DC source can be, e.g., a DC link with a DC link capacitor and/or the output of a rectifier. The electric connection point between the two switching units inside the half-bridge is the output node or half-bridge node of that half-bridge.

To this half-bridge node a resonant circuit for the wireless power transmission is connected as a load. The resonant circuit comprises one or more than one transmission coil (sending coil) and at least one capacitive element, like is known from the prior art. One half-bridge node may be electrically connected to a respective electrical contact or connector of the resonant circuit. If only one half-bridge is provided, a second electrical contact or connector of the resonant circuit may be connected to a neutral potential (for completing the electric circuit). If two half-bridges are provided, the second electrical contact or connector of the resonant circuit may be connected to the half-bridge node of the second half-bridge, such that the two half-bridges may be operated as a full H-bridge. By means of the at least one half-bridge, an AC current may be evoked in the resonant circuit. To this end, the voltage that the load receives from the inverter circuit at the respective half-bridge node is repeatedly switched from a first voltage value to a second voltage value and back to the first voltage value.

For providing such a switched voltage at the half-bridge node of each half-bridge, a switching cycle is repeatedly performed at a power transfer frequency, wherein the switching cycle comprises that in each half-bridge a control circuit alternatingly connects the half-bridge node to the plus potential in one half-cycle and then to the minus potential in the other half-cycle by setting the corresponding switching unit into an on state while keeping the respective other switching unit in an off state. In the on state the respective switching unit has its minimum electric resistance (switching unit is "closed") and the half-bridge node is therefore electrically connected to the respective potential of the DC source (plus potential or minus potential). As the other switching unit is in the off state it blocks any electric current such that no short circuit occurs (switching unit is "open"). The switching cycle may comprise a positive half-cycle (connection to plus potential) and a negative half-cycle (connection to minus potential). The duration of a single switching cycle is the inverse value of the power transfer frequency. If two half-bridges are used, their half-cycles are phase-shifted by 180°, as is known from the prior art for operating an H-bridge.

For alternating between the half-cycles, a transient phase is performed. Synonyms for "transient phase" are "deadtime phase" and "commutation phase" or "shifting phase". A dead time between the "opening" of the currently conductive switching unit (switching from the on state into the off state) and the "closing" of the currently blocking switching unit (switching from the off state into the on state) is needed. This prevents any short circuiting that may otherwise occur if both switching units in the respective half-bridge are switched at the same time. Accordingly, the transient phase comprises that the switching unit that is currently in the on state and provides an electric load current to the load is set into the off state. As now both switching units are in the off state (all switching elements, e.g. transistors, are non-conductive) this commutates the load current to the freewheeling element of the other switching unit (the one that has been in the off state for the now ending half-cycle). Note that the commutated load current it not driven by the DC source any more, but rather by the resonant circuit of the load.

The invention is based on the insight, that this commutated load current is needed for a zero-voltage switching at the end of the transient phase, as the parasitic capacitances of the switching units are charged and/or discharged by the commutated load current and by this the electric potential of the half-bridge node is shifted from the respective current potential (DC source plus potential or minus potential) to which it had been connected to during the last half-cycle, to the respective other potential to which it shall be connected to in the following half-cycle. This describes two cases: If in the current half-cycle (before the transient phase), the half-bridge node has been connected to the plus potential of the DC source, it is disconnected from that plus potential in the transient phase and due to the change in the charging state of the parasitic capacitances the electric potential of the half-bridge node is shifted towards the minus potential. Likewise, if in the current half-cycle, the half-bridge node has been connected to the minus potential of the DC source, the electric potential of the half-bridge node is shifted towards the plus potential.

Ideally, at the end of the transient phase, the electric potential of the half-bridge node should be shifted to the respective other potential of the DC source as close as possible, because the transient phase is finished by switching of the other switching unit into the on state, which should ideally be a zero-voltage switching, ZVS, i.e. the electric voltage should have an absolute value of zero or at most the electric voltage of the forward voltage of the at least one freewheeling element. For example, at the end of the transient phase, the absolute value of the voltage across the switching unit that is to be switched into the on state is less than 3 volts, preferably less than 2 volts. In general, absolute value the potential difference or voltage between the half-bridge node and the DC source potential that it will be connected to at the end of the transient phase, should be minimized.

In order to ensure this electric state of the half-bridge node at the end of each transient phase, an additional support circuit is connected in parallel to the load, wherein the support circuit comprises at least one energy storing element that is charged with energy by a charging current during the respective half-cycle and in the respective transient phase the support circuit drives a support current using the stored energy from its at least one energy storing element. The support current adds to the commutated load current in the inverter circuit and it has been found that this support current contributes to the charging and/or discharging of the parasitic capacitances of the switching units and by this supports shifting the potential of the half-bridge node.

The invention provides the advantage that even in the case that the resonant circuit or the resonant arrangement (comprising the resonant circuit of the primary side and the receiving resonant circuit of the mobile side) do not comprise enough energy to fully shift the electric potential of the half-bridge node for achieving a zero-voltage switching, the missing or additional energy (for charging and/or discharging the parasitic capacitances) is provided by the support circuit such that during the transient phase by driving the support current the electric energy for charging and/or discharging the parasitic capacitances is available. Thus, even if the resonant frequency of the resonant circuit or of the resonant arrangement as a whole is detuned or different with regard to the power transfer frequency, by providing the additional support circuit, zero-voltage switching can be supported. Thus, the switching units can be switched at minimum or at least lowered absolute potential difference or minimum voltage across a switching unit at the end of the respective transient phase. This reduces the losses and/or EMI in the inverter circuit.

It is noted here that the current through the switching circuit acts as the charging current in each half-cycle and as the support current during the transient phase. In general, the current through the support circuit is denoted here as additional current as it adds to the load current from the point of view of the inverter circuit.

The method comprises that high frequency, HF, signal components of the load current with a frequency of at least twice the power transfer frequency is lead to a ground potential by at least one Y-capacitor of the support circuit. This further reduces EMI by providing a low impedance for the high frequency signal components with regard to the ground potential. For choosing the correct Y-capacitor, the possible values for the power transfer frequency can be determined based on the design of the inverter circuit and/or the control circuit and then a suitable value for the respective Y-capacitor can be chosen on the basis of the formula for the capacitive reactance and/or the formula for calculating the resistance of an RC-circuit for a high-pass filter as known from the prior art. Preferably, the at least one Y-capacitor provides a high-pass filter with a cutoff frequency of said value in the range of 1.5 times the power transfer frequency to 3 times or 5 times the power transfer frequency. A Y-capacitor can have a value in a range from 47pf to 10nF, e.g. 4.7nF.

The invention also comprises embodiments that provide features which afford additional technical advantages.

One embodiment comprises that two half-bridges are provided that each comprise a respective output node or half-bridge node. The two half-bridges are operated as an H-bridge for providing the switched voltage between their two half-bridge nodes, wherein the load and the support circuit are connected to the two half-bridge nodes.

The two half-bridges may be operated inversely phased, i.e. at a phase shift of 180°. Thus, during the half-cycles, one half-bridge node is connected to the plus potential and the other half-bridge node is connected to the minus potential. This increases the absolute value of the voltage that is provided between the two half-bridge nodes for driving the load current in the resonant circuit. Each half-bridge node may be connected to a respective connector of the load and a respective connector of the support circuit.

One embodiment comprises that a DC current through the support circuit is blocked by at least one DC-blocking capacitor of the support circuit. The at least one DC-blocking capacitor may be provided in series to the at least one energy storage element. Thus, the charging current in the support circuit may charge or load the respective energy storage element with energy while at the same time a DC-component of the charging current through the support circuit is blocked by the at least one DC-blocking capacitor. This ensures that by the support circuit no DC short circuit for a common-mode component of the electric current flowing between the half-bridge nodes is caused or generated. A suitable capacity of a DC-blocking capacitor may be in the range of 50 nF to 400 nF.

One embodiment comprises that a fundamental component of the current through the support circuit (i.e. the additional current) is out of phase with regard to the load current. By choosing a support circuit with such a resonant behavior, it is possible to tune the support circuit with regard to the resonant behavior of the resonant circuit or load such that the fundamental component can be cancelled. This allows to suppress not only a DC-component but also the fundamental component. A suitable resonant behavior of the support circuit may be achieved on the basis of an LC-circuit (L - inductor, C - capacitor).

One embodiment comprises that the power transfer frequency is in a range from 20kHz to 150kHz.

According to a second aspect the invention provides the already mentioned wireless power transmission device for an inductive electric power transmission. As has been explained, the wireless power transmission device can be used as the stationary or primary side of a wireless power transmission system that additionally may comprise the receiving side or mobile side. A receiving resonant circuit comprising a receiving coil may be used here as is known from the prior art.

The power transmission device comprises the following components. One component is the resonant circuit for emitting the power to a receiving coil (by generating a time-varying magnetic field). The resonant circuit comprises one or more than one transmission coil and at least one capacitive element. The resonant circuit can be designed, e.g., as a coil with at least one integrated capacitor in the middle of the winding on both the primary and secondary side.

One further component is the inverter circuit with the at least one half-bridge node to which the resonant circuit is connected for receiving both the switched voltage and the load current (for generating the time varying magnetic field). The inverter circuit comprises at least one half-bridge with two switching units that each comprise a freewheeling element, wherein the first switching unit links a plus potential of a DC source to one half-bridge node and the second switching unit links the same half-bridge node to a minus potential of the DC source. Preferably, the inverter circuit comprises an H-bridge with two half-bridges resulting in two half-bridge nodes. It is noted here that the term "link" means that the respective switching unit is soldered or otherwise provided as a linking element between the half-bridge node and the respective electric terminal or potential of the DC source. Only when the respective switching unit is in the on state or when a current flows through the freewheeling element, there also is an electric connection between the half-bridge node and the respective potential. When the switching unit is in the off state and not freewheeling current is flowing, the at least one switching element, e.g. at least one transistor, blocks a current through the switching unit and thus no electric connection is provided.

One further component is the control circuit for controlling the switching units of the at least one half-bridge (for generating the switched voltage). The control circuit is designed to repeatedly perform a switching cycle at a power transfer frequency, wherein each switching cycle comprises two half-cycles that are separated by a respective transient phase (deadtime phase or commutation phase) where both the switching units are set to an off state and the current inside the inverter circuit commutates to at least one freewheeling element. The control circuit can be based, for example, on at least one microprocessor and/or at least one microcontroller and/or at least one ASIC (Application Specific Integrated Circuit) and/or on a circuitry of logic modules and/or an analogue multi-vibrator circuit. It is noted here that each half-cycle does not correspond to exactly half the duration of a full switching cycle as the duration of the two transient phases that are also part of each switching cycle need to be subtracted. As the duration of a half-cycle is at least 5 times (preferablyat least 10 times) longer than the duration of the transient phase, the duration of the transient phase has been neglected and the term "half-cycle" was chosen here. An alternative term for "half-cycle" may be "on-cycle" as switching units are in the on state.

Each switching cycle comprises a succession of a transient phase, a positive half-cycle, another transient phase and a negative half-cycle. The choice of the value of the power transfer frequency can be made adaptive according to a known procedure that may be applied for matching the power transfer frequency to the current resonant frequency of the described resonant arrangement of the stationary primary side and the mobile secondary side of the power transfer transmission system.

One further component is the support circuit that is connected to the at least one half-bridge node in parallel to the resonant circuit. The support circuit comprises at least one energy storing element that is designed to receive electric energy and store the received energy during the respective half-cycle and to drive a support current using the stored energy during the respective next transient phase, wherein the support current adds to the load current in the inverter circuit and therefore contributes to charging and/or discharging parasitic capacitances of the switching units and by this supports shifting the potential of at least one of the half-bridge nodes between the plus potential and the minus potential. Thus, in the case that two half-bridge nodes are provided by an H-bridge, the two half-bridge nodes are connected to both the load and the support circuit individually or separately in the sense that the load and the support circuit are connected in parallel to each other. This ensures that the support circuit does not have an influence on the resonant behavior of the load.

The power transmission device comprises that the energy storing element of the support circuit comprises one or more than one inductor. This at least one inductor interconnects the half-bridge nodes of two half-bridges. The at least one inductor receives the electric charging current from the inverter circuit during each half-cycle and is thus charged with energy. In the transient phases, the at least one inductor provides the support current using the stored energy. The support current then supplies the energy for charging and/or discharging the capacitance at the half-bridge nodes. The direction of the support current and the immediately preceding charging current are the same. The one or more inductor preferably each has a size in the range of 100µH to 500µH.

The power transmission device comprises that said inductor of the support circuit comprises two windings that are connected in series between the half-bridge nodes of the inverter circuit and an electric connection between the two windings comprises at least one electric and/or electronic element. In one implementation, the windings are provided with the same number of turns or one number of turns is at the most 10% smaller than the other number of turns. This allows for a symmetric arrangement or a symmetric design of the switching circuit with respect to the half-bridge nodes of two switching units. As the switched voltage is also symmetric, this provides the benefit that for both half-cycles of a full switching cycle the support circuit has the same electrical behavior. Any additional electric element or electronic element may be added or provided in between the two windings.

The power transmission device comprises in one development that the electric connection between the two windings is connected to a ground potential by at least one circuit branch that comprises a respective Y-Capacitor. One single Y-capacitor may be provided in a single branch that may connect a single connecting node or tap between the two windings to the ground potential. Alternatively, two circuit branches with a respective Y-capacitor may be provided for connecting two nodes or taps between the two windings to the ground potential, and in between these two taps additional electric or electronic elements may be provided. For example, an arrangement of a DC-blocking capacitor and two Y-capacitors may be provided between the two windings. This yields a support circuit that may also short circuit the described HF signal components to a ground potential.

One embodiment comprises that the support circuit comprises an identical or a symmetric design regarding the resulting electric connection of each of the half-bridge nodes to the ground potential. The symmetric design may comprise a single circuit branch with its Y-Capacitor (no DC blocking capacitor provided). Alternatively, the symmetric design may comprise one DC blocking capacitor and two circuit branches. Alternatively, the symmetric design comprises one circuit branch and two DC blocking capacitors. With these combinations, DC blocking and/or reduction of HF signal components can be achieved and at the same time the support circuit may exhibit an identical electric behavior for both the positive half-cycle and the negative half-cycle.

One embodiment comprises that the respective circuit branch comprises a resistor for limiting a ground current. This prevents excessive heat generation in the case of an increased amounts of HF signal components, as a resistor helps dampening oscillations.

One embodiment comprises that the two windings are arranged on separate ferromagnetic cores. One embodiment comprises that the two windings are arranged on a common ferromagnetic core and the windings are electrically connected in series. The two windings act as a transformer. With regard to the half-bridge nodes, the inductance of the two windings add to provide the energy storing element. On the other hand, from the perspective of a ground potential to which the tap between the two windings may be connected, the inductances of the two windings subtract such that they do not block the filtering of HF signal components.

The power transmission device comprises in one development that the resonant circuit is connected to the inverter circuit and to the support circuit over a shielded cable and an electric shielding of the cable is connected to the ground potential at a ground connection point that is arranged at a distance to a ground connection point of the support circuit, wherein the distance is smaller than or less than 50 cm. In other word, the ground connection point of the shielding is very close the Y-Capacitor for short-cutting the HF signal components. This design has proven beneficial for short-cutting HF signal components that may be caused by the parasitic capacitance that exists between the shielding and the cable itself.

The support circuit may alternatively be electrically detached from a ground potential and comprises at least one inductor only or at least one inductor and at least one DC blocking capacitor for blocking a DC current through the support circuit. This arrangement can be used as an alternative where the two half-bridge nodes of an H-bridge are connected without additional connection to the ground potential. The inductor used can have a single winding. The resulting support circuit can be designed as an LC-link that is connected in parallel to the load, with no additional connection to the ground potential.

One embodiment comprises that the respective switching unit comprises at least one transistor and/or at least one thyristor and/or the respective freewheeling element comprises at least one diode, in particular a body diode. The at least one transistor and/or at least one thyristor acts as a respective switching element as has already been described. As a transistor, preferably a MOS power transistor (MOS -Metal-Oxide-Semiconductor) technology or MOSFET (Metal-Oxide-Semiconductor Field-Effect Transistor) and/or IGBT (Insulated-Gate Bipolar Transistor) is used. Two H-bridges can be provided in the form of a so-called power module or power semiconductor module or power electronic module as it is available from the prior art. The invention enhances or supports such an H-bridge as an additional circuit that may be added in the described form. A freewheeling element may already be available as a component of a switching element in the form of the described body diode. If an additional freewheeling element is needed, one or more additional diodes may be provided.

The invention also comprises embodiments of the inventive power transmission device that comprise features that correspond to the features as they have already been described in connection with the embodiments of the inventive vehicle. Likewise, the invention also comprises embodiments of the inventive method that comprise the features that correspond to features as they have already been described in connection with the embodiments of the inventive power transmission device. For this reason, the corresponding features of the embodiments of the inventive method are not described here again.

The invention also comprises the combinations of the features of the different embodiments.

In the following an exemplary implementation of the invention is described. The figures show:
- Fig. 1: a schematic illustration of a wireless power transmission system with an embodiment of the wireless power transmission device as a primary side;
- Fig. 2: a schematic illustration of an embodiment of the wireless power transmission device with a support circuit that comprises an inductor as an energy storing element;
- Fig. 3: diagrams with schematic graphs showing electrical quantities of the wireless power transmission device of Fig. 2;
- Fig. 4: a schematic illustration of the embodiment of the wireless power transmission device of Fig. 2 during a half-cycle and during a transient phase;
- Fig. 5: a schematic illustration of a half-bridge that may be provided in an embodiment of the wireless power transmission device;
- Fig. 6: a schematic illustration of a wireless power transmission system with an embodiment of the wireless power transmission device that uses a support circuit with an LC-element;
- Fig. 7: a schematic illustration of a wireless power transmission system with an embodiment of the wireless power transmission device that uses a support circuit with a symmetric design and two circuit branches that are connected to a ground potential;
- Fig. 8: a schematic illustration of the support circuit of Fig. 7;
- Fig. 9: a schematic illustration of an inverter circuit and a support circuit of an embodiment of the wireless power transmission device that uses a support circuit with a symmetric design and a single circuit branch that is connected to a ground potential;
- Fig. 10: a schematic illustration of an embodiment of the wireless power transmission device that uses a shielded cable and the support circuit of Fig. 8; and
- Fig. 11: a schematic illustration of an embodiment of the wireless power transmission device that uses a shielded cable and the support circuit of Fig. 9.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

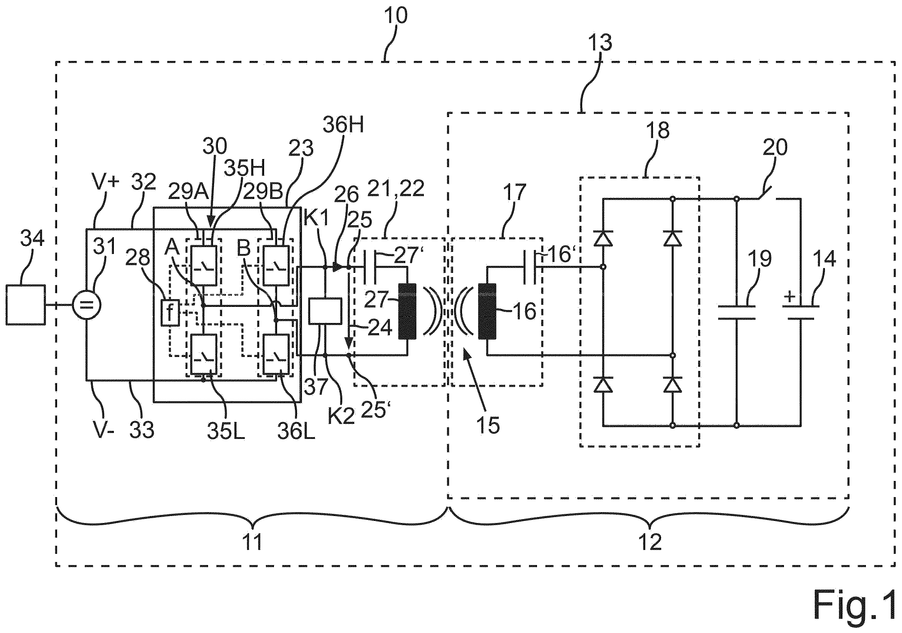

Fig. 1 shows a wireless power transmission system 10 that may comprise -on a stationary side or primary side- a wireless power transmission device 11 and -on a secondary side or mobile side- a wireless power receiving system 12. The wireless power receiving system 12 may be integrated in a mobile robot or mobile vehicle 13 that may comprise an electric energy storage 14, for example, at least one battery module. By means of the wireless power receiving system 12, energy may be received wirelessly from the wireless power transmission device 11, and the received energy may be stored in the energy storage 14 thus recharging the energy storage. The stored energy may be used, for example, for driving an electric drive system of the vehicle 13 as it is known from the prior art. The transmission of the energy or power may be based on a time-varying magnetic field 15 that may be generated by the wireless power transmission device 11 and that may be received by the wireless power receiving system 12.

In the wireless power receiving system 12 an electric voltage and current may be induced in a receiving coil 16 of a resonant circuit 17 that may also comprise at least one capacitance 16'. Further on the mobile side, a passive or active rectifier 18 may be connected to the resonant circuit 17 and may feed directly a mobile energy system which may consist of several loads (e.g. DC/DC-converter, not shown) and/or the energy storage device 14 (e.g. battery modules, supercaps, ultracaps). A DC-link capacitor 19 may be provided. A switch 20 may be provided for controlling a charging current into the energy storage device 14.

On the primary side the wireless power transmission device 11 may comprise a resonant circuit 21 that may be connected as an electric load 22 to an inverter circuit 23 that may generate a switched voltage 24 between electric contacts or electric connectors 25, 25' of the resonant circuit 21. Due to the switched voltage 24, a load current 26 may be evoked in the resonant circuit 21. In particular, the load current 26 is an AC (Alternating Current). The load current 26 may flow in a transmission coil 27 of the resonant circuit 21 which may generate the time-varying magnetic field 15 that induces the voltage and current and the receiving coil 16. At least one capacitive element 27' may be provided in the resonant circuit 21 for achieving resonant characteristics. The resonant circuit 21 may be designed according to the prior art.

For generating the switched voltage 24 with a power transfer frequency f, the inverter circuit 23 may be operated or controlled by a control circuit 28 that may control two half-bridges 29A, 29B that may be operated together as an H-bridge 30. On an input side, the inverter circuit 23 may be connected to a DC source 31 which may provide a plus terminal or plus potential 32 and a minus terminal or minus potential 33 for connecting to the inverter circuit 23. The DC source 31 may be connected to an electric power network 34, which can be, for example, an AC 120-Volt or 230-Volt network. The DC source 31 may comprise in a known fashion a rectifier and/or a DC link. Each H-bridge 29A, 29B may be connected to both the plus potential 32 and the minus potential 33.

In each half-bridge 29A, 29B, two switching units 35H, 35L, 36H, 36L may be provided. The letter "H" stands for "high side", the letter "L" for "low side" in the known fashion. In each half-bridge, the switching units 35 (i.e. 35H, 35L) and the switching unit 36 (i.e. 36H, 36L) are connected in series between the plus potential 32 and the minus potential 33, respectively. The electric connection between the switching units of the respective half-bridge is an output connector or half-bridge node A, B. To these two half-bridge nodes A, B, a respective one of the connectors 25, 25' is connected. By controlling the switching units 35, 36, the control circuit 28 alternatingly connects the half-bridge nodes A, B to the plus potential 32 and the minus potential 33. In the following, the term "half-bridge node" is abbreviated as "node", i.e. the half-bridge node A is termed "node A", and the half-bridge node B is termed "node B".

In the wireless power transmission device 11, for switching of the switching units 35, 36, zero-voltage switching is supported by a support circuit 37. The support circuit 37 is connected in parallel to the load 22 with regard to the node A, B. In other words, both the load 22 and the support circuit 37 interconnect the nodes A, B independently from each other.

The support circuit 37 may be connected to node A via an electric connecting point or connector K1 and to the node B via a connecting point or connector K2. In particular, the connection between node A and connector K1 can be a direct connection without any further electrical component like a resistor or a capacitor or an inductor. Likewise, for the connection between node B and the connector K2 can be a direct connection without any further electric element like a resistor or a capacitor or an inductor may be provided. Thus, also an electric line, for example, an electric cable or an electric busbar, may provide the electric connection. Likewise, the connector 25 of the resonant circuit 21 to the node A can be designed without any further electrical component, i.e. without resistor or capacitor or inductor, but rather can be based on said electric line, i.e. the cable and/or busbar, for example. Likewise, the electric connector 25' can be connected directly to node B via the electric like, e.g. the cable or busbar, especially without any further electric component like a resistor or capacitor or inductor. The respective connectors K1, K2, 25, 25' can be, for example, a soldering point or a plug or in a simple case a segment or a section of a cable or busbar, respectively. In general, it represents the electric connection region where the electric current enters or leaves the support circuit 37 (connectors K1, K2) or the resonant circuit 21 (connectors 25, 25'), respectively.

A potential difference or supply voltage between the electric potentials 32, 33 as it may be generated by the DC source 31 may be in the range of 50 Volts to 2 Kilovolts.

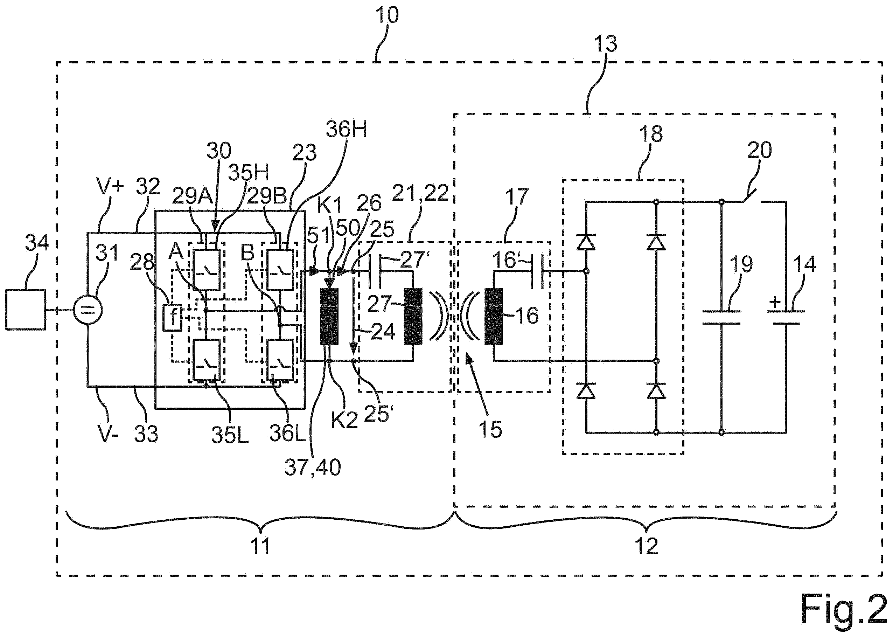

Fig. 2 illustrates an example of the support circuit 37 that is based on or comprises an inductor as an energy storing element 40. It is noted that in Fig. 2 and the following figures, as an energy storing element 40 at least one inductor is illustrated. However, the skilled person should be aware that as an energy storing element a capacitor and/or another electric or electronic element may be used. For deriving a suitable design for such a support circuit, the well-known "equivalent transformation" of electric circuits may be applied and a support circuit using at least one inductor as a respective energy storing element may be used as a basis.

Fig. 2 also illustrates the support circuit current or additional current 50 that flows through the support circuit 37, e.g. the inductor 40 in the example of Fig. 2. The load current 26 and the additional current 50 add in the inverter circuit to result in a resulting current 51 at the nodes A and B (potentially minus HF signal components that might be lead to a ground potential).

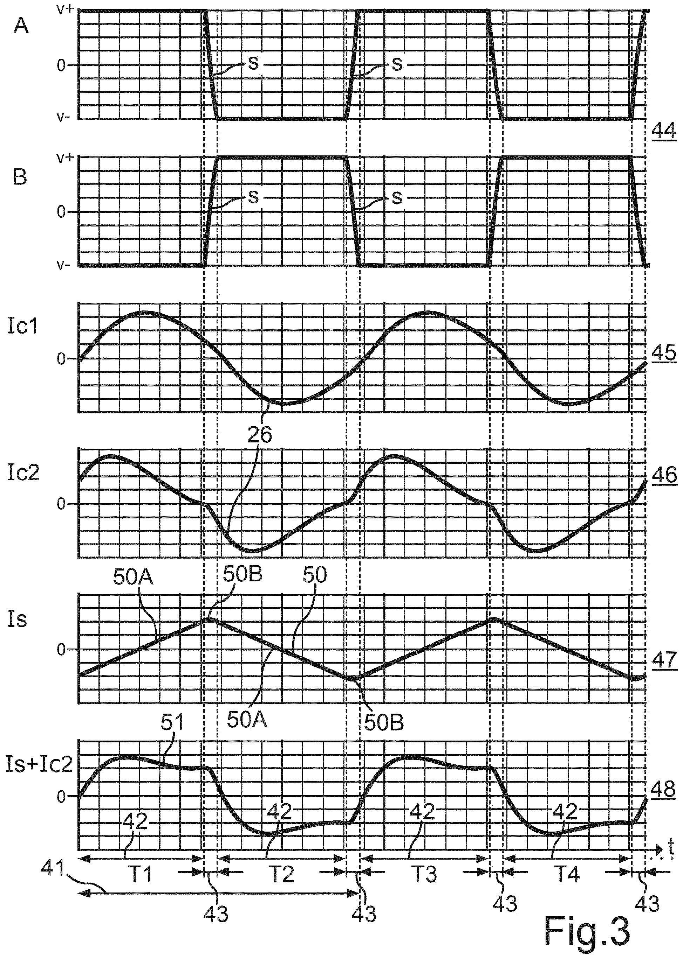

Fig. 3 illustrates the basic functionality of the support circuit 37 with its energy storage element 40.

Fig. 3 shows a diagram where over time t several switching cycles 41 of the inverter circuit 23 are illustrated. The duration of each switching cycle 41, is the inverse value of the power transfer frequency f as applied by the control circuit 28. Each switching cycle 41 may comprise half-cycles 42 that are named here as T1, T2, T3, T4 for illustration purposes only. In between the half-cycles 42, a respective transient phase 43 may be provided.

A first diagram 44 shows the switching states of the H-bridges 29A, 29B by illustrating the electric potential of the respective nodes A, B. In the half-cycle T1, node A is connected to the plus potential 32 whereas with a phase shift of 180°, node B is connected to the minus potential 33. By changing the switching states of the switching units 35, 36 in the half-bridges 29A, 29B during the following transient phase 43, node A is connected to the minus potential 33 and node B is connected to the plus potential 32 in the next half-cycle T2. A full switching cycle 41 is finished by a second transient phase 43 following half-cycle T2. Then, for half-cycle T3 this pattern is repeated.

During the transient phases 43, a shifting S of the electric potential of the respective node A, B to one of the potentials 32, 33 of the DC source 31 to the respective other potential 32, 33 must be achieved.

A diagram 45 shows an optimal wave form Ic1 of the resulting current 51. Diagram 45 shows a case where the power transmission frequency f matches the resonant frequency of the resonant arrangement comprising the resonant circuit 21 and the resonant circuit 17. An optimal current waveform Ic1 for the load current 26 may result (ideal resonant switching with the power transmission frequency f being set to the true resonance frequency of the resonant arrangement).

A diagram 46 shows sub-optimal wave form Ic2 of the resulting current 51 (non-ideal resonant switching with the power transmission frequency f being set to a different value than the true resonance frequency of the resonant arrangement, for example, f is too low). Diagram 46 shows a case where the power transmission frequency f does not match the resonant frequency of the resonant arrangement (not ideally tuned case). The sub-optimal current waveform Ic2 for the load current 26 may result. At the end of each half-cycle 42 during the transient phase 43 there is less load current 26 for a resonant voltage transition.

The following observation has been made that forms the basis of this disclosure. Under some operating conditions the current Ic2 has a high peak factor and then a tail with little energy in each half-cycle. In this case, the current is not high enough to commutate the voltage in the inverter circuit completely during the transient phases 43. This means that maintaining zero-voltage switching in the primary side is not possible, resulting in high EMI and switching losses.

The highly variable current at the end of the switching half-cycle 42 also means that the speed of commutation is poorly defined, a high current leads to high dv/ dt (derivative of voltage v with respect to time t) and fast switching edges which cause resonance in the coil system. If the current is low, then the transition is at first slow and then hard switched again exciting coil resonance. The switching of the transistors or other switching units of the inverter circuit can be slowed down, but this results in high switching losses.

A diagram 47 shows the wave form Is of the overall additional current 50 through the support circuit 37. This additional current 50 charges the energy storing element 40 with energy during the half-cycles 42 and this energy is then available in the following transient phase 43 for driving the support current 50A. Thus the additional current 50 (Is) can be considered to have two successive or alternating phases, a charging phase and a commutation phase. The charging phase corresponds to the half-cycle 42 where energy is being stored in the at least one inductor by building up the charging current 50A. The commutation phase corresponds to the transient phase 43 where the at least one inductor supplies the support current 50B. The support circuit 37 therefore provides the support current 50B during the transient phase 43 that adds to the load current 26 during the transient phase 43 ensuring that the strength or absolute value of the commutated resulting current in the inverter circuit 23 is larger as compared to the case shown in diagram 46, i.e. in the sub-optimal tuning case. During the transient phase 43, the resulting current 51 is also denoted here as commutated resulting current 51'. For the example shown, an inductor L and a DC blocking capacitor (L = 300µH and C = 100nF) were used.

A diagram 48 shows that the resulting current 51 is the sum Ic2 + Is of the load current 26 and the support current 50. The diagram 48 shows the resulting wave form of the resulting current 51 in the case of the wave forms Ic2 and Is. A comparison between the diagram 46 and 48 shows that during the transient phases 43, the resulting current in the inverter circuit 23 has a higher absolute value than without the support current from the support circuit 37.

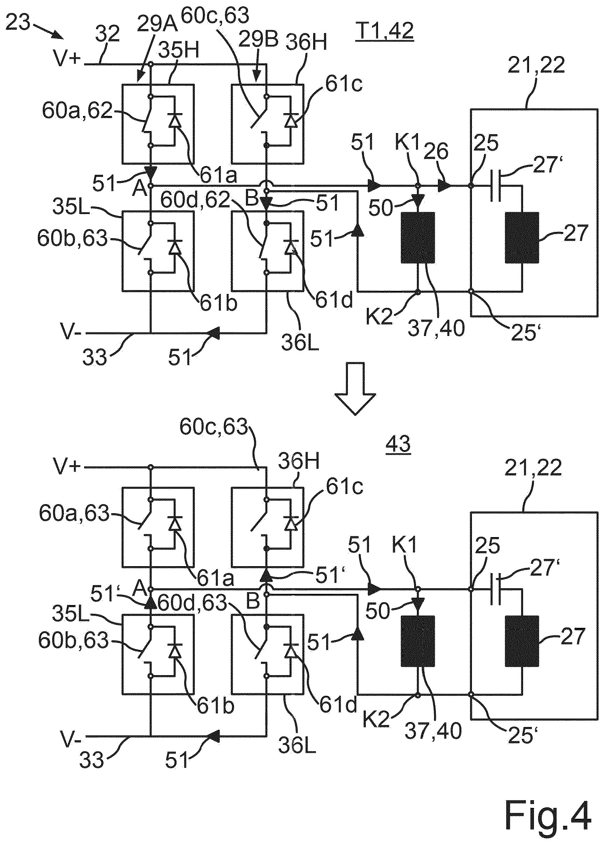

Fig. 4 illustrates how this support current 50B supports zero-voltage switching in the inverter circuit 23.

Fig. 4 illustrates exemplaryly the effect of the energy storing element 40 of the support circuit 37. For example, an energy storing element 40 in the form of an inductor may be assumed here. Fig. 4 illustrates a half-cycle 42, for example the half-cycle T1, and the following transient phase 43. For the explanation, it is illustrated that each switching unit 35, 36 may comprise a switching element 60a, 60b, 60c, 60d which represented by a switch symbol. An example for such a switching element 60 (representing 60a, 60b, 60c, 60d) is a transistor or a thyristor.

In parallel to each switching element 60, a freewheeling element 61a, 61b, 61c, 61d may be provided, for example, as a diode or a body diode. The exemplary half-cycle 42 shown in Fig. 4 comprises that the switching elements 60a and 60d are in an on state 62 and the respective opposite or other switching elements 60b, 60c of the respective half-bridge 29A, 29B is in an off state 63. The load current 26 and the support current 50 are added or superimposed in the inverter circuit 23 as the resulting current 51 through the switching elements 60a and 60d. For the following transient phase 43, all switching elements 60a, 60b, 60c, 60d are set into the off state 63. As the transmission coil 27 and the energy storing element 40 in the form of an inductor continue driving the load current 26 and the support current 50, respectively, the resulting current 51 in the inverter circuit 23 commutates from the switching element 60a, which is now in the off state 63, and the switching element 60d, which is now in the off state 63, to the freewheeling elements 61b, 61c.

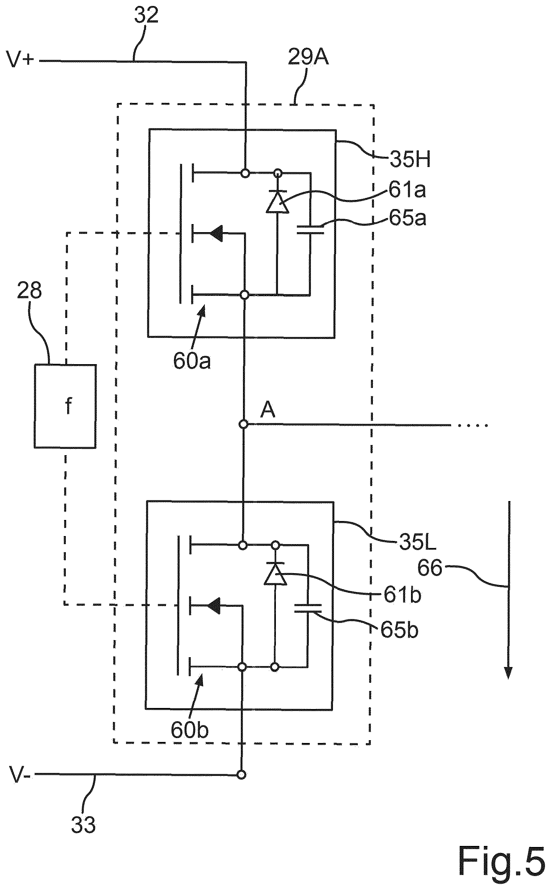

While Fig. 5 illustrates the effect for the half-bridge 29A, the corresponding effect applies to the other half-bridge 29B. Fig. 5 illustrates that a switching element 60a, 60b in the form of a transistor or thyristor not only comes with a body diode as a freewheeling element 61a, 61b but also with a parasitic capacitance 65a, 65b. In the case shown in Fig. 4 and Fig. 5 for the half-cycle 42, where switching element 60a is in the on state 62 and switching element 60b is in the off state, the parasitic capacitance 65a is discharged whereas the parasitic capacitance 65b is charged. In other words, electric energy is stored in the parasitic capacitance 65b.

Another term for the shown parasitic capacitances is Cₒₛₛ. Cₒₛₛ is also known as the output capacitance which is the sum of gate-drain and drain-source capacitance in a FET (field effect transistor). It influences turn-off characteristic and loss with light load. The greater Cₒₛₛ, the lower the turn-off dv/dt.

By setting the switching element 60a in the off state 62 for the transient phase 43 in Fig. 4 and Fig. 5, the parasitic capacitance 65b needs to be discharged and the parasitic capacitance 65a needs to be charged in order to shift the electric potential of the node A from the plus potential 32 to the minus potential 33. This requires energy for charging the parasitic capacitance 65a. As it is shown in Fig. 3 in diagram 46, the load current 26 may not be sufficiently large enough in the transient phase 43 following the half-cycle T1. Correspondingly, not enough energy may be available in the resonant circuit 41 for discharging or charging the parasitic capacitances 65a, 65b in the half-bridge 29A. The same applies for corresponding parasitic capacitances in the switching units 36H, 36L.

As the support circuit 37 drives the support current 50B during the transient phase 43 and thus supports or helps charging and/or discharging the parasitic capacitances 65a, 65b in the switching units 35, 36 such that although the load current 26 might not be sufficiently large enough, the support current 50B yields a resulting commutated current 51' that may charge and/or discharge the parasitic capacitances 65a, 65b of the switching units 35,36 with the energy from the energy storing element 40 of the support circuit 37. Driving the support current 50B is achieved by inductance in the case of an energy storing element 40 in the form of at least one inductor.

With an energy storing element 40 in the form of an inductor, the value of the inductance can be in the already described range for ensuring that a difference between the electric potential of the node A and the minus potential 33 (in the case of the half-cycle T1) is minimal, i.e. the resulting voltage 66 is in the ideal case a zero-voltage for switching the switching unit 35L in the case shown in Fig. 4 and Fig. 5. The skilled person will acknowledge that the resulting voltage 66 will not be perfectly set to 0 volts as at least the forward voltage of the freewheeling element remains.

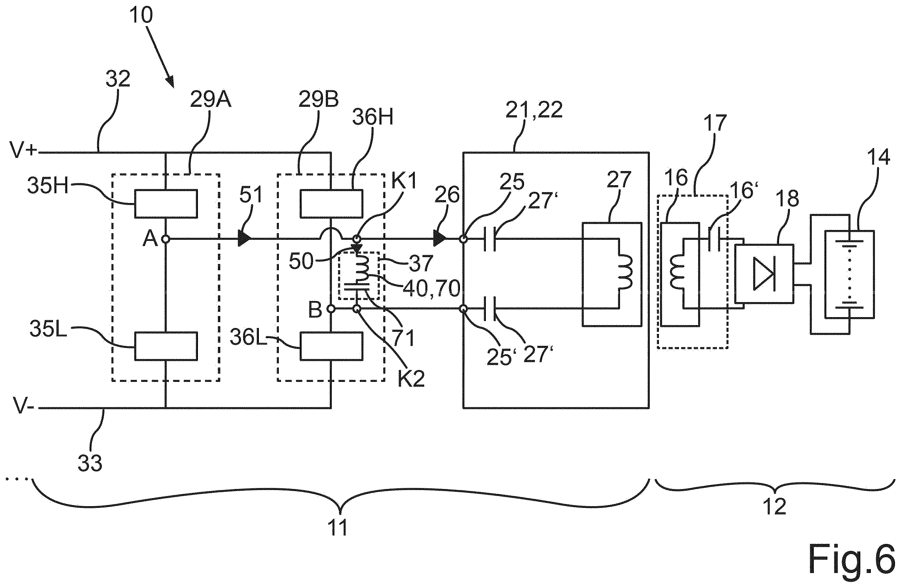

Fig. 6 shows an embodiment of the wireless power transmission device 11 where the support circuit 37 comprises as an energy storing element 40 an inductor 70 with, for example, one winding. The inverter circuit may be a standard H-bridge with 4 switching units and resonant capacitors 27' may be provided in the primary WPT coil (WPT - wireless power transmission), with an extra inductor 70 of capacity L and an optional DC-blocking capacitor 71 with capacitance C. The secondary coil, rectifier and battery are also shown on the secondary side. The inductor 70 can be designed with a ferromagnetic core or without such a core. In the support circuit 37, a DC-blocking capacitor 71 may be provided in series to the energy storing element 40, e.g. the inductor 70. The DC-blocking capacitor 71 blocks a DC current that might otherwise flow between the electric connectors 25' of the support circuit 37 and that might therefore flow between the nodes A and B of the half-bridges 29A, 29B. In other words, between the connectors K1, K2, the energy storing element 40, e.g. the inductor 70, is connected in series to the DC-blocking capacitor 71, which both connect by their series the two connectors K1, K2.

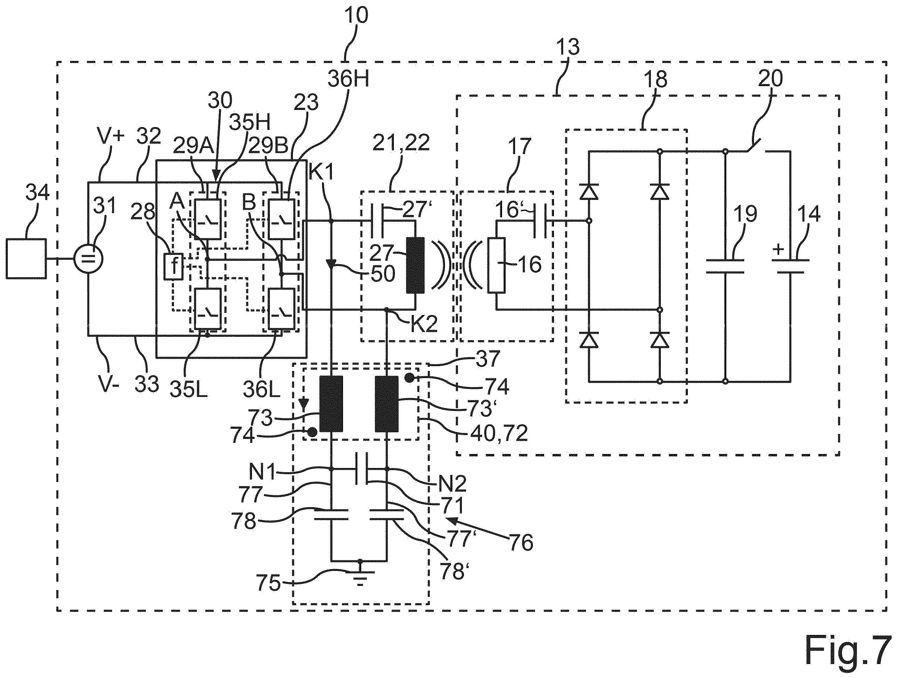

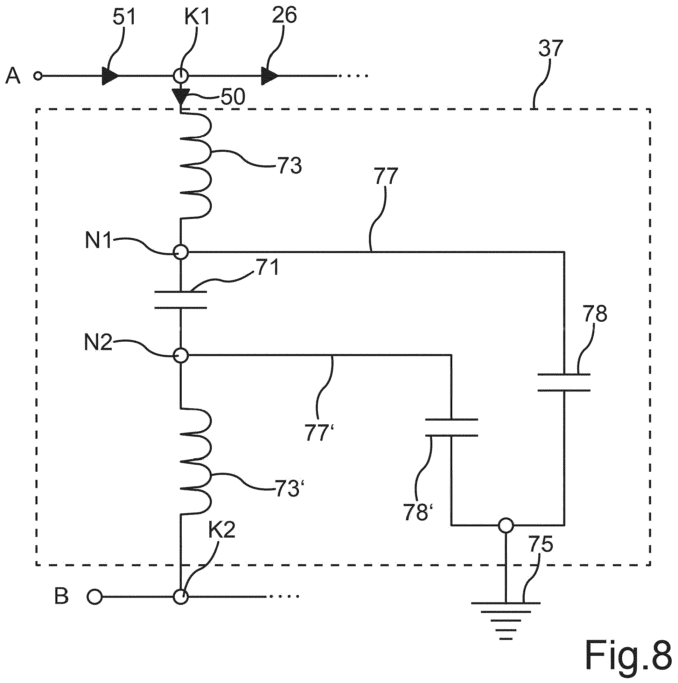

Fig. 7 and Fig. 8 illustrate an example where the support circuit 37 has a symmetric design as opposed to the asymmetric design of the support circuit 37 according to Fig. 6.

According to the example shown in Fig. 7 and Fig. 8, the support circuit 37 may comprise an energy storing element 40 that may comprise an inductor 72 with two windings 73 that may be arranged in the same or common orientation 74 that is represented in Fig. 7 in the well-known way as a dot for indicating the beginning or end of the respective winding 73. The two windings 73 may be arranged on a common ferromagnetic core or on separate ferromagnetic cores. Coupling the winding 73 using a common ferromagnetic core provides the advantage that from the point of view of the two connectors K1, K2 the inductance values of the winding 73 add, whereas from the point of view of a ground potential 75 which the symmetric support circuit 37 may be connected, the two inductance values of the winding 73 subtract or annihilate. Between the two windings, one or several electric components 76 may be provided. For example, one winding may connect the connector K1 to a first node or tap N1, and the other winding 73 may connect the connector K2 to a second node or tap N2. Between the two taps N1, N2, the one or more than one electric component 76 may be provided. The taps shown here are in general defined by the fact that they are contact points of at least three current paths or points where an electric current is split. The physical design (soldering point, socket) may be chosen by the skilled person.

In the example of Fig. 7 and Fig. 8, one electric component may be a DC-blocking capacitor 71 that may connect the two taps N1, N2. Additionally, two circuit branches 77, 77' may be provided. The circuit branch 77 may connect the tap N1 to the ground potential 75. The circuit branch 77' may connect the tap N2 to the ground potential 75. In each of the circuit branches 77, 77', a Y-capacitor 78, 78' may be provided for leading HF-components of the currents in the wireless power transmission device 11 may be short-circuited to the ground potential 75. In other words, the examples of Fig. 7 and Fig. 8 use a commutation inductor over the half-bridges with two windings and Dc blocking capacitor taps connected to Y caps for providing a EMI return path for connecting HF signal components to the ground potential.

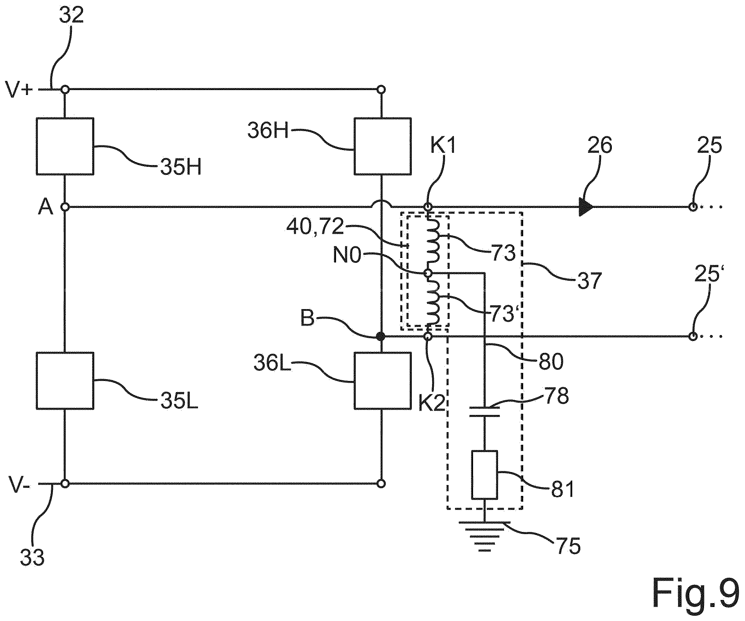

Fig. 9 shows a design for the switching circuit 37 without a DC-blocking capacitor. The switching circuit 37 of Fig. 9 also has a symmetric design. The energy storing element 40 in the form of the inductor 72 with its two windings 73, 73' may be connected in series between the two connectors K1, K2 of the switching circuit 37 and in between the two windings 73, 73', a single node or tap N0 may be provided to which a single circuit branch 80 may be connected that leads from the tap N0 to the ground potential 75. The circuit branch 80 may comprise a Y-capacitor 78. The circuit branch 80 may comprise a resistor 81, which may limit the current flowing to the ground potential or from the ground potential 75. The windings 73, 73' may be arranged on a common ferromagnetic core or on separate ferromagnetic cores. The windings 73, 73' may have no ferromagnetic core at all.

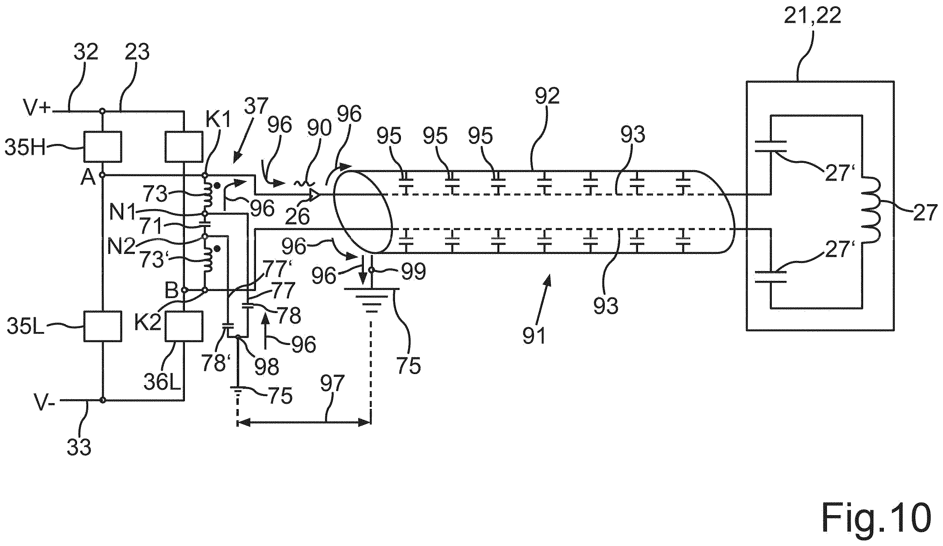

Fig. 10 illustrates how the design as shown in Fig. 7 and Fig. 8 with its circuit branches 77, 77' leading to the ground potential 75 may be used for short-circuiting HF-signal components 90. Fig. 10 shows that the inverter circuit 23 and the support circuit 37 may be connected to the resonant circuit 21, i.e. the load 22, via an electric cable 91 with an electric conductive shielding 92. The electric cable 91 may be a two wire cable with one wire being connected to node A and connector K1 and the other wire being connected to node B and connector K2. In general, the two wires represent two electric conductors 93, 94 for conducting the load current 26. Between the electric conductors 93, 94 and the shielding 92 a parasitic capacitance 95 may exist. By means of a symbolic representation of the parasitic capacitance 95 in Fig. 10, symbolic discrete capacitors are shown. To keep Fig. 10 readable, only a few of these symbolic capacitors are indicated with a reference sign. Arrows 96 indicate the path or flow of the electric current of the HF signal components 90. In order to provide a low electric resistance in this electric path, a distance 97 between a connection point 98 of the support circuit 37 to the ground potential 75 and a connection point 99 of the shielding 92 to the ground potential 75 may be less than one meter, preferably less than 50 cm. The two connection points 98, 99 may be connected by an electrically conducting material, preferably a metal, like, e.g., steel or aluminum or copper. The connection points 98, 99 may even be directly connected at the same connector to the ground potential 75. The ground potential may be provided by a casing or chassis or the device.

This provides a protection against EMI: The shielding is an EMI screen of the cables. The cables to the coil have switched voltages which are capacitively coupled into the screen. This results in a current in the screen which is then connected to the chassis or casing (at ground potential). The resulting current needs a path back to its source, the windings of the inductor provide a short and direct path through the Y-Capacitor back to the transistors or other switching units. This works as each inductor winding has half the bridge voltage and so assuming the bridge is symmetrical the mid-point is static so can be connected to ground.

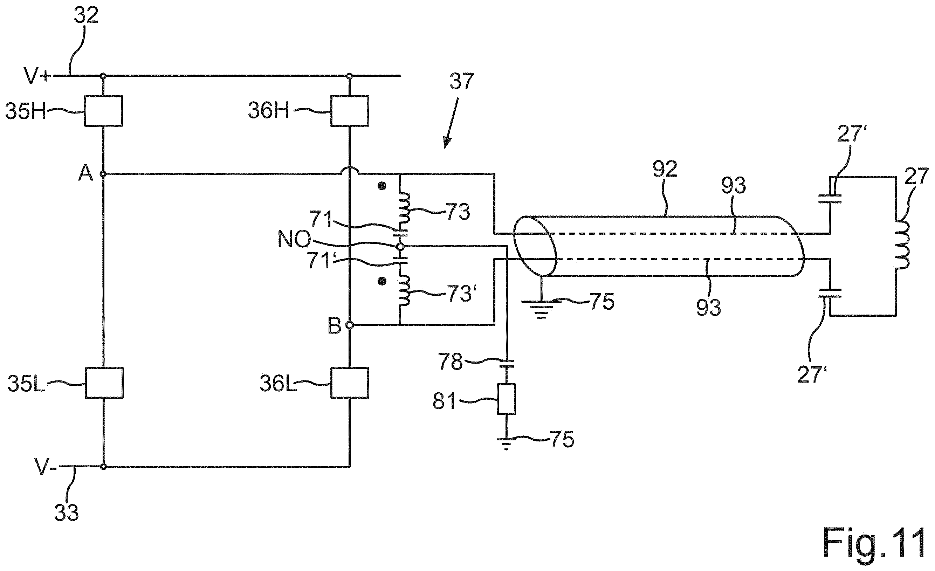

Fig. 11 illustrates the use of the design of the support circuit 37 as it is shown in Fig. 9 in connection with the electric shielding 92 of a shielded cable 91 that connects the inverter circuit 23 and the support circuit 37 on one side to the resonant circuit 21 on the other side. Additionally, a preferably symmetric arrangement of DC-blocking capacitors 71, 71' is provided. The same effect as it is explained in connection with Fig. 10 can also be achieved with this design of the support circuit 37. The example of Fig. 11 may therefore be denoted as the "EMI version" with a two winding inductor with windings 73 of identical winding number W1 W2, connected through DC-blocking capacitors 71, 71'of identical capacitance C1, C2 to a single Y-Capacitor of capacitance Cy at node N0. Also shown is a screen 92 surrounding the two wires 93 connecting to the primary transmission coil 27.

Any embodiment of the support circuit may comprise an electric or electronic switch that may be provided for blocking the electric current through the switching circuit. This provides the advantage that the switching circuit may be deactivated in the wireless power transmission device. The switch may be based on a transistor or a relay. In one version the switch may be controlled by a sensing circuit that senses an electric or thermal quantity that is indicative of the need for the support current (see Fig. 3, diagram 46). If the quantity fulfills a predefined support criterion (e.g. the current at the end of half-cycles in Fig.3, diagram 46 is below a predefined threshold), the support circuit may be turned on (switch closed), otherwise the support circuit may be left deactivated thus saving energy.

In the following, further preferred embodiments are described.

Thus, adding an extra inductor in parallel to the transistor bridge, adds a defined current and ensures there is always enough energy to create resonant switching. As the energy for cummutation is defined as LI². L is the inductance of the energy storing element and it is constant and the current is proportional to the switched voltage (as the power switching frequency hardly changes), which is beneficial as the commutation energy required is also proportional to the voltage. The current strength I is the charging current at the end of each half-cycle. Note that this extra current needed is output off phase with the coil current and has a minor effect on the RMS current in the switching circuit (RMS - root mean square). Another advantage is that the systems can be dimensioned differently and so operated closer to the optimal frequency and the inductor eliminated capacitive switching for the transistors.

To ensure that there is no DC current in the inductor a DC blocking capacitor can be added, if the winding is split into 2 windings, the middle point will be close to a constant voltage. This can then be used as part of the EMI design and connected to ground using Y capacitors as shown in Fig. 7 to Fig. 11.

The following aspects may be provided alone or in combination:
- Commutation inductor over H bridge
- Commutation inductor over bridge with Dc blocking capacitor H bridge
- Commutation inductor over half bridge with 2 windings and Dc blocking capacitor
- Commutation inductor over half bridge with two windings (no dc blocking), tap connected to Y caps for EMI return
- Commutation inductor over half bridge with two windings and Dc blocking capacitor taps connected to Y caps for EMI return
- Use of commutation inductor for EMI

Overall, the example shows how a reduction of losses and EM radiation in a converter of an inductive charging station can be achieved.

## Claims

1. Method for operating an inverter circuit (23) in a wireless power transmission device (11), wherein the inverter circuit (23) comprises at least one half-bridge (29A, 29B) with two switching units (35H, 35L, 36H, 36L) that each have a parasitic capacitance (65) and that each comprise a freewheeling element (61), wherein in the respective half-bridge (29A, 29B) the first switching unit (35H, 36H) links a plus potential (V+) of a DC source (31) to a half-bridge node (A, B) and the second switching unit (35L, 36L) links the half-bridge node (A, B) to a minus potential (V-) of the DC source (31), and wherein
a resonant circuit (21) for the wireless power transmission is connected as a load (22) to the half-bridge node (A, B), wherein the resonant circuit (21) comprises a transmission coil (27) and at least one capacitive element (27'), and
for providing a switched voltage (24) at the half-bridge node (A, B) a switching cycle (41) is repeatedly performed at a power transfer frequency (f), wherein the switching cycle (41) comprises that a control circuit (28) alternatingly connects the half-bridge node (A, B) to the plus potential (V+) in one half-cycle (42) and to the minus potential (V-) in the other half-cycle (42) by setting the corresponding switching unit (35H, 36L) into an on state (62) while keeping the respective other switching unit (35L, 36H) in an off state (63) and
for alternating between the half-cycles (42) a transient phase (43) is performed wherein the switching unit (35H, 36L) that is currently in the on state (62) and provides an electric load current (26) to the load (22) is set into the off state (63) which commutates the load current (51') to the freewheeling element (61) of the other switching unit (35L, 36H) such that the parasitic capacitances (65) of the switching units (35H, 35L, 36H, 36L) are charged and/or discharged and by this the electric potential of the half-bridge node (A, B) is shifted from the respective current potential (V+, V-) to which is has been connected to, to the respective other potential (V-, V+), and
the transient phase (43) is finished by a zero-voltage switching, ZVS, of the other switching unit (35L, 36H) into the on state (62), wherein
an additional support circuit (37) is connected in parallel to the load (22), wherein the support circuit (37) comprises at least one energy storing element (40) that is charged with energy by a charging current (50A) during the respective half-cycle (42) and
in the respective following transient phase (43) the support circuit (37) drives a support current (50B) using the stored energy from its at least one energy storing element (40),
wherein the support current (50B) adds to the commutated load current (51') in the inverter circuit (23) and therefore contributes to the charging and/or discharging of the parasitic capacitances (65) of the switching units (35H, 35L, 36H, 36L) and by this supports shifting the potential of the half-bridge node (A, B), **characterized in that**
high frequency, HF, signal components (90) of the load current (26) with a frequency of at least twice the power transfer frequency (f) are lead to a ground potential (75) by at least one Y-capacitor (78, 78') of the support circuit (37).

2. Method according to claim 1, wherein two half-bridges (29A, 29B) are provided that each comprise a half-bridge node (A, B) and that are operated as an H-bridge (30) for providing the switched voltage (24) between the two half-bridge nodes (A, B) and wherein the load (22) and the support circuit (37) are connected to the two half-bridge nodes (A, B).

3. Method according to any of the preceding claims, wherein a DC current through the support circuit (37) is blocked by at least one DC-blocking capacitor (71, 71') of the support circuit (37) and/or wherein a fundamental component of the current (50) through the support circuit (37) is out of phase with regard to the load current (26).

4. Method according to any of the preceding claims, wherein the power transfer frequency (f) is in a range from 20 kHz to 150 kHz.

5. Wireless power transmission device (11) for an inductive electric power transmission, wherein the power transmission device (11) comprises:
a resonant circuit (21) for emitting the power to a receiving coil (16), wherein the resonant circuit (21) comprises at least one transmission coil (27) and at least one capacitive element (27'),
an inverter circuit (23) with at least one half-bridge node (A, B) to which the resonant circuit (21) is connected for receiving both a switched voltage (24) and a load current (26), wherein the inverter circuit (23) comprises at least one half-bridge (29A, 29B) with two switching units (35H, 35L, 36H, 36L) that each comprise a freewheeling element (61), wherein the first switching unit (35H, 36H) links a plus potential (V+) of a DC source (31) to the respective half-bridge node (A, B) and the second switching unit (35L, 36L) links the same half-bridge node (A, B) to a minus potential (V-) of the DC source (31), and
a control circuit (28) for controlling the switching units (35H, 35L, 36H, 36L) of the at least one half-bridge (29A, 29B), wherein the control circuit (28) is designed to repeatedly perform a switching cycle (41) at a power transfer frequency (f), wherein each switching cycle (41) comprises two half-cycles (42) and the half-cycles (42) are separated by a respective transient phase (43) where the switching units (35H, 35L, 36H, 36L) are set to an off state (63) and the load current (26) commutates to at least one freewheeling element (61), wherein
a support circuit (37) is connected to the at least one half-bridge node (A, B) in parallel to the resonant circuit (21), wherein
the support circuit (37) comprises at least one energy storing element (40) that is designed to receive electric energy and store the received energy during the respective half-cycle (42) and to drive a support current (50B) using the stored energy during the respective next transient phase (43), wherein the support current (50B) adds to the load current (26) in the inverter circuit (23) and contributes to charging and/or discharging parasitic capacitances (65) of the switching units (35H, 35L, 36H, 36L) and by this supports shifting the potential of at least one of the half-bridge node (A, B) between the plus potential (V+) and the minus potential (V-) in the transient phase (43),
wherein the energy storing element (40) of the support circuit (37) comprises at least one inductor (70) that interconnects the respective half-bridge nodes (A, B) of two half-bridges (29A,. 29B) of the inverter circuit (23) and that is designed to receive an electric charging current (50A) from the inverter circuit (23) in the respective half-cycle (42) for getting charged with energy and that is designed to drive the support current (50B) by inducing a voltage using the stored energy, **characterized in that**
the at least one inductor (70) of the support circuit comprises two windings (73, 73') that are connected in series between the half-bridge nodes (A, B) of the inverter circuit (23) and an electric connection between the two windings (73, 73') comprises at least one electric and/or electronic element, wherein
a) the electric connection between the two windings (73, 73') is connected to a ground potential (75) by at least one circuit branch (77, 77') that comprises a respective Y-Capacitor (78, 78'), and/or
b) the resonant circuit (21) is connected to the inverter circuit (23) and to the support circuit (37) over a shielded cable (91) and an electric shielding (92) of the cable (91) is connected to the ground potential (75) at a ground connection point (99) that is at a distance (97) to a ground connection point (98) of the support circuit (37), wherein the distance (97) is smaller than 50 cm.

6. Power transmission device (11) according to claim 5, wherein the respective circuit branch (77, 77') comprises the Y-Capacitor (78, 78') and the support circuit (37) comprises a symmetric design regarding the resulting electric connection of each of the half-bridge nodes (A, B) to the ground potential (75) and the symmetric design comprises
• a single circuit branch (80) with its Y-Capacitor (78) or
• one DC blocking capacitor (71) and two circuit branches (77, 77') or
• one circuit branch (80) and two DC blocking capacitors (71, 71').

7. Power transmission device (11) according to claim 5 or 6, wherein the respective circuit branch (77, 77') comprises the Y-Capacitor (78, 78') and the respective circuit branch comprises a resistor (81) for limiting a ground current and/or damping an oscillation of the ground current.

8. Power transmission device (11) according to any of claims 5 to 7, wherein the two windings (73, 73') are electrically connected in series and are arranged on a common ferromagnetic core or wherein the two windings (73, 73') are arranged on separate ferromagnetic cores.

9. Power transmission device (11) according to any of claims 5 to 8, wherein the respective switching unit (35H, 35L, 36H, 36L) comprises at least one transistor (60) and/or at least one thyristor and/or the respective freewheeling element (61) comprises at least one diode, in particular a body diode.

## Patentansprüche

1. Verfahren zum Betreiben einer Wechselrichterschaltung (23) in einer drahtlosen Leistungsübertragungsvorrichtung (11), wobei die Wechselrichterschaltung (23) mindestens eine Halbbrücke (29A, 29B) mit zwei Schalteinheiten (35H, 35L, 36H, 36L) umfasst, die jeweils eine parasitäre Kapazität (65) aufweisen und jeweils ein Freilaufelement (61) umfassen, wobei in der jeweiligen Halbbrücke (29A, 29B) die erste Schalteinheit (35H, 36H) ein Pluspotential (V+) einer Gleichstromquelle (31) mit einem Halbbrücken-Knoten (A, B) verbindet und die zweite Schalteinheit (35L, 36L) den Halbbrücken-Knoten (A, B) mit einem Minuspotential (V-) der Gleichstromquelle (31) verbindet, und wobei
eine Resonanzschaltung (21) für die drahtlose Leistungsübertragungsvorrichtung als Last (22) mit dem Halbbrücken-Knoten (A, B) verbunden ist, wobei die Resonanzschaltung (21) eine Übertragungsspule (27) und mindestens ein kapazitives Element (27') umfasst, und zur Bereitstellung einer geschalteten Spannung (24) am Halbbrücken-Knoten (A, B) wiederholt ein Schaltzyklus (41) mit einer Leistungsübertragungsfrequenz (f) durchgeführt wird, wobei der Schaltzyklus (41) umfasst, dass eine Steuerschaltung (28) den Halbbrücken-Knoten (A, B) in einem Halbzyklus (42) mit dem Pluspotential (V+) und in dem anderen Halbzyklus (42) mit dem Minuspotential (V-) verbindet, indem sie die entsprechende Schalteinheit (35H, 36L) in einen eingeschalteten Zustand (62) versetzt, während sie die jeweils andere Schalteinheit (35L, 36H) in einem Aus-Zustand (63) hält, und
zum Wechseln zwischen den Halbzyklen (42) eine Übergangsphase (43) durchgeführt wird, in der die Schalteinheit (35H, 36L), die sich gerade im eingeschalteten Zustand (62) befindet und einen elektrischen Laststrom (26) an die Last (22) bereitstellt, in den Aus-Zustand (63) versetzt wird, wodurch der Laststrom (51) zum Freilaufelement (61) der anderen Schalteinheit (35L, 36H) kommutiert, so dass die parasitären Kapazitäten (65) der Schalteinheiten (35H, 35L, 36H, 36L) geladen und/oder entladen werden und dadurch das elektrische Potential des Halbbrücken-Knotens (A, B) von dem jeweiligen Strompotential (V+, V-), mit dem es verbunden war, auf das jeweils andere Potential (V-, V+) verschoben wird, und
die Übergangsphase (43) durch ein Nullspannungsschalten, ZVS, der anderen Schalteinheit (35L, 36H) in den eingeschalteten Zustand (62) beendet wird, wobei
eine zusätzliche Stützschaltung (37) parallel zur Last (22) verbunden ist, wobei die Stützschaltung (37) mindestens ein Energiespeicherelement (40) umfasst, das durch einen Ladestrom (50A) während des jeweiligen Halbzyklus (42) mit Energie geladen wird und
in der jeweils folgenden Übergangsphase (43) die Stützschaltung (37) einen Stützstrom (50B) unter Verwendung der gespeicherten Energie aus ihrem mindestens einen Energiespeicherelement (40) antreibt,
wobei der Stützstrom (50B) zum kommutierten Laststrom (51') in der Wechselrichterschaltung (23) hinzukommt und somit zum Laden und/oder Entladen der parasitären Kapazitäten (65) der Schalteinheiten (35H, 35L, 36H, 36L) beiträgt und dadurch das Umschalten des Potentials des Halbbrücken-Knotens (A, B) unterstützt,
**dadurch gekennzeichnet, dass**
hochfrequente (HF) Signalkomponenten (90) des Laststroms (26) mit einer Frequenz von mindestens dem Doppelten der Leistungsübertragungsfrequenz (f) durch mindestens einen Y-Kondensator (78, 78') der Stützschaltung (37) zu einem Erdpotential (75) geführt werden.

2. Verfahren nach Anspruch 1, wobei zwei Halbbrücken (29A, 29B) bereitgestellt sind, die jeweils einen Halbbrücken-Knoten (A, B) umfassen und die als H-Brücke (30) betrieben werden, um die geschaltete Spannung (24) zwischen den beiden Halbbrücken-Knoten (A, B) bereitzustellen, und wobei die Last (22) und die Stützschaltung (37) mit den beiden Halbbrücken-Knoten (A, B) verbunden sind.

3. Verfahren nach einem der vorhergehenden Ansprüche, wobei ein Gleichstrom durch die Stützschaltung (37) durch mindestens einen Gleichstromsperrkondensator (71, 71') der Stützschaltung (37) gesperrt wird und/oder wobei eine Grundkomponente des Stroms (50) durch die Stützschaltung (37) zum Laststrom (26) phasenverschoben ist.

4. Verfahren nach einem der vorhergehenden Ansprüche, wobei die Leistungsübertragungsfrequenz (f) in einem Bereich von 20 kHz bis 150 kHz liegt.

5. Drahtlose Leistungsübertragungsvorrichtung (11) für eine induktive elektrische Leistungsübertragung, wobei die Leistungsübertragungsvorrichtung (11) umfasst:
eine Resonanzschaltung (21) zum Aussenden der Leistung an eine Empfangsspule (16), wobei die Resonanzschaltung (21) mindestens eine Übertragungsspule (27) und mindestens ein kapazitives Element (27') umfasst,
eine Wechselrichterschaltung (23) mit mindestens einem Halbbrücken-Knoten (A, B), an den die Resonanzschaltung (21) angeschlossen ist, um sowohl eine geschaltete Spannung (24) als auch einen Laststrom (26) zu empfangen, wobei die Wechselrichterschaltung (23) mindestens eine Halbbrücke (29A, 29B) mit zwei Schalteinheiten (35H, 35L, 36H, 36L) umfasst, die jeweils ein Freilaufelement (61) umfassen, wobei die erste Schalteinheit (35H, 36H) ein Pluspotential (V+) einer Gleichstromquelle (31) mit dem jeweiligen Halbbrücken-Knoten (A, B) verbindet und die zweite Schalteinheit (35L, 36L) denselben Halbbrücken-Knoten (A, B) mit einem Minuspotential (V-) der Gleichstromquelle (31) verbindet, und
eine Steuerschaltung (28) zum Steuern der Schalteinheiten (35H, 35L, 36H, 36L) der mindestens einen Halbbrücke (29A, 29B), wobei die Steuerschaltung (28) so ausgelegt ist, dass sie wiederholt einen Schaltzyklus (41) mit einer Leistungsübertragungsfrequenz (f) durchführt, wobei jeder Schaltzyklus (41) zwei Halbzyklen (42) umfasst und die Halbzyklen (42) durch eine jeweilige Übergangsphase (43) getrennt sind, in der die Schalteinheiten (35H, 35L, 36H, 36L) in einen Aus-Zustand (63) versetzt werden und der Laststrom (26) zu mindestens einem Freilaufelement (61) kommutiert, wobei
eine Stützschaltung (37) parallel zur Resonanzschaltung (21) mit dem mindestens einen Halbbrücken-Knoten (A, B) verbunden ist, wobei
die Stützschaltung (37) mindestens ein Energiespeicherelement (40) umfasst, das dazu ausgelegt ist, elektrische Energie aufzunehmen und die aufgenommene Energie während des jeweiligen Halbzyklus (42) zu speichern und einen Stützstrom (50B) unter Verwendung der gespeicherten Energie während der jeweiligen nächsten Übergangsphase (43) anzutreiben, wobei der Stützstrom (50B) zum Laststrom (26) in der Wechselrichterschaltung (23) hinzukommt und zum Laden und/oder Entladen parasitärer Kapazitäten (65) der Schalteinheiten (35H, 35L, 36H, 36L) beiträgt und dadurch das Verschieben des Potentials mindestens eines der Halbbrücken-Knoten (A, B) zwischen dem Pluspotential (V+) und dem Minuspotential (V-) in der Übergangsphase (43) unterstützt,
wobei das Energiespeicherelement (40) der Stützschaltung (37) mindestens eine Induktivität (70) umfasst, die die jeweiligen Halbbrücken-Knoten (A, B) zweier Halbbrücken (29A, 29B) der Wechselrichterschaltung (23) miteinander verbindet und die dazu ausgelegt ist, in dem jeweiligen Halbzyklus (42) einen elektrischen Ladestrom (50A) von der Wechselrichterschaltung (23) aufzunehmen, um mit Energie geladen zu werden, und die dazu ausgelegt ist, den Stützstrom (50B) durch Induzieren einer Spannung unter Verwendung der gespeicherten Energie anzutreiben,
**dadurch gekennzeichnet, dass**
die mindestens eine Induktivität (70) der Stützschaltung zwei Wicklungen (73, 73') umfasst, die in Reihe zwischen den Halbbrücken-Knoten (A, B) der Wechselrichterschaltung (23) verbunden sind, und eine elektrische Verbindung zwischen den beiden Wicklungen (73, 73') mindestens ein elektrisches und/oder elektronisches Element umfasst, wobei
a) die elektrische Verbindung zwischen den beiden Wicklungen (73, 73') über mindestens einen Schaltungszweig (77, 77'), der einen jeweiligen Y-Kondensator (78, 78') umfasst, mit einem Erdpotential (75) verbunden ist, und/oder
b) die Resonanzschaltung (21) über ein abgeschirmtes Kabel (91) mit der Wechselrichterschaltung (23) und der Stützschaltung (37) verbunden ist und eine elektrische Abschirmung (92) des Kabels (91) an einem Erdungspunkt (99), der sich in einem Abstand (97) zu einem Erdungspunkt (98) der Stützschaltung (37) befindet, mit dem Erdpotential (75) verbunden ist, wobei der Abstand (97) kleiner als 50 cm ist.

6. Leistungsübertragungsvorrichtung (11) nach Anspruch 5, wobei der jeweilige Schaltungszweig (77, 77') den Y-Kondensator (78, 78') umfasst und die Stützschaltung (37) eine symmetrische Auslegung hinsichtlich der resultierenden elektrischen Verbindung jedes der Halbbrücken-Knoten (A, B) mit dem Erdpotential (75) umfasst und die symmetrische Auslegung umfasst
• einen einzigen Schaltungszweig (80) mit seinem Y-Kondensator (78) oder
• einen Gleichstromsperrkondensator (71) und zwei Schaltungszweige (77, 77') oder
• einen Schaltungszweig (80) und zwei Gleichstromsperrkondensatoren (71, 71').

7. Leistungsübertragungsvorrichtung (11) nach Anspruch 5 oder 6, wobei der jeweilige Schaltungszweig (77, 77') den Y-Kondensator (78, 78') umfasst und der jeweilige Schaltungszweig einen Widerstand (81) zum Begrenzen eines Erdstroms und/oder zum Dämpfen einer Schwingung des Erdstroms umfasst.

8. Leistungsübertragungsvorrichtung (11) nach einem der Ansprüche 5 bis 7, wobei die beiden Wicklungen (73, 73') elektrisch in Reihe verbunden und auf einem gemeinsamen ferromagnetischen Kern angeordnet sind oder wobei die beiden Wicklungen (73, 73') auf getrennten ferromagnetischen Kernen angeordnet sind.

9. Leistungsübertragungsvorrichtung (11) nach einem der Ansprüche 5 bis 8, wobei die jeweilige Schalteinheit (35H, 35L, 36H, 36L) mindestens einen Transistor (60) und/oder mindestens einen Thyristor umfasst und/oder das jeweilige Freilaufelement (61) mindestens eine Diode, insbesondere eine Body-Diode, umfasst.

## Revendications

1. Procédé pour faire fonctionner un circuit inverseur (23) dans un dispositif (11) de transmission de puissance sans fil, dans lequel le circuit inverseur (23) comprend au moins un demi-pont (29A, 29B) avec deux unités de commutation (35H, 35L, 36H, 36L) qui présentent chacune une capacité parasite (65) et qui comprennent chacune un élément (61) de roue libre, dans lequel, dans le demi-pont (29A, 29B) respectif, la première unité de commutation (35H, 36H) relie un potentiel positif (V+) d'une source (31) de courant continu à un nœud en demi-pont (A, B) et la seconde unité de commutation (35L, 36L) relie le nœud en demi-pont (A, B) à un potentiel négatif (V-) de la source (31) de courant continu, et dans lequel
un circuit résonnant (21) pour la transmission de puissance sans fil est connecté en tant que charge (22) au nœud en demi-pont (A, B), le circuit résonnant (21) comprenant une bobine de transmission (27) et au moins un élément capacitif (27'), et
pour fournir une tension commutée (24) au niveau du nœud en demi-pont (A, B), un cycle de commutation (41) est réalisé de manière répétée à une fréquence (f) de transfert de puissance, le cycle de commutation (41) comprenant le fait qu'un circuit de commande (28) connecte alternativement le nœud en demi-pont (A, B) au potentiel positif (V+) dans un demi-cycle (42) et au potentiel négatif (V-) dans l'autre demi-cycle (42) en mettant l'unité de commutation (35H, 36L) correspondante dans un état activé (62) tout en maintenant l'autre unité de commutation (35L, 36H) respective dans un état désactivé (63) et
pour alterner entre les demi-cycles (42), une phase transitoire (43) est réalisée, l'unité de commutation (35H, 36L) qui est actuellement à l'état activé (62) et fournit un courant (26) de charge électrique à la charge (22), étant mise à l'état désactivé (63), ce qui commute le courant de charge (51') vers l'élément (61) de roue libre de l'autre unité de commutation (35L, 36H) de sorte que les capacités parasites (65) des unités de commutation (35H, 35L, 36H, 36L) sont chargées et/ou déchargées et, de ce fait, le potentiel électrique du nœud en demi-pont (A, B) est transféré du potentiel de courant (V+, V-) respectif auquel il a été connecté, vers l'autre potentiel (V-, V+) respectif, et
la phase transitoire (43) est terminée par une commutation à tension nulle, ZVS (pour « zero-voltage switching »), de l'autre unité de commutation (35L, 36H) vers l'état activé (62), dans lequel
un circuit auxiliaire (37) supplémentaire est connecté en parallèle à la charge (22), le circuit auxiliaire (37) comprenant au moins un élément (40) de stockage d'énergie qui est chargé en énergie par un courant de charge (50A) pendant le demi-cycle (42) respectif et
dans la phase transitoire (43) suivante respective, le circuit auxiliaire (37) génère un courant auxiliaire (50B) à l'aide de l'énergie stockée dans son au moins un élément (40) de stockage d'énergie,
dans lequel le courant auxiliaire (50B) s'ajoute au courant (51') de charge commuté dans le circuit inverseur (23) et contribue ainsi à la charge et/ou à la décharge des capacités parasites (65) des unités de commutation (35H, 35L, 36H, 36L) et favorise ainsi le transfert du potentiel du nœud en demi-pont (A, B),
**caractérisé en ce que**
les composantes (90) de signal haute fréquence (HF) du courant de charge (26) ayant une fréquence au moins deux fois supérieure à la fréquence (f) de transfert de puissance sont amenées à un potentiel de masse (75) par au moins un condensateur en Y (78, 78') du circuit auxiliaire (37).

2. Procédé selon la revendication 1, dans lequel deux demi-ponts (29A, 29B) sont prévus, qui comprennent chacun un nœud en demi-pont (A, B) et qui fonctionnent comme un pont en H (30) pour fournir la tension commutée (24) entre les deux nœuds en demi-pont (A, B), et dans lequel la charge (22) et le circuit auxiliaire (37) sont connectés aux deux nœuds en demi-pont (A, B).

3. Procédé selon l'une quelconque des revendications précédentes, dans lequel un courant continu traversant le circuit auxiliaire (37) est bloqué par au moins un condensateur (71, 71') de blocage de courant continu du circuit auxiliaire (37) et/ou dans lequel une composante fondamentale du courant (50) traversant le circuit auxiliaire (37) est déphasée par rapport au courant de charge (26).

4. Procédé selon l'une quelconque des revendications précédentes, dans lequel la fréquence (f) de transfert de puissance est comprise dans une plage de 20 kHz à 150 kHz.

5. Dispositif (11) de transmission de puissance sans fil pour une transmission d'énergie électrique par induction, le dispositif (11) de transmission de puissance comprenant :
un circuit résonnant (21) pour émettre l'énergie vers une bobine réceptrice (16), le circuit résonnant (21) comprenant au moins une bobine de transmission (27) et au moins un élément capacitif (27'),
un circuit inverseur (23) avec au moins un nœud en demi-pont (A, B) auquel le circuit résonnant (21) est connecté pour recevoir à la fois une tension commutée (24) et un courant de charge (26), le circuit inverseur (23) comprenant au moins un demi-pont (29A, 29B) avec deux unités de commutation (35H, 35L, 36H, 36L) qui comprennent chacune un élément (61) de roue libre, la première unité de commutation (35H, 36H) reliant un potentiel positif (V+) d'une source (31) de courant continu au nœud en demi-pont (A, B) respectif et la seconde unité de commutation (35L, 36L) reliant le même nœud en demi-pont (A, B) à un potentiel négatif (V-) de la source (31) de courant continu, et
un circuit de commande (28) pour commander les unités de commutation (35H, 35L, 36H, 36L) de l'au moins un demi-pont (29A, 29B), le circuit de commande (28) étant conçu pour réaliser de manière répétée un cycle de commutation (41) à une fréquence (f) de transfert de puissance, chaque cycle de commutation (41) comprenant deux demi-cycles (42) et les demi-cycles (42) étant séparés par une phase transitoire (43) respective dans laquelle les unités de commutation (35H, 35L, 36H, 36L) sont mises dans un état désactivé (63) et le courant de charge (26) commute vers au moins un élément (61) de roue libre, dans lequel
un circuit auxiliaire (37) est connecté à l'au moins un nœud en demi-pont (A, B) en parallèle au circuit résonnant (21), dans lequel
le circuit auxiliaire (37) comprend au moins un élément (40) de stockage d'énergie qui est conçu pour recevoir de l'énergie électrique et stocker l'énergie reçue pendant le demi-cycle (42) respectif et pour générer un courant auxiliaire (50B) en utilisant l'énergie stockée pendant la phase transitoire (43) suivante respective, le courant auxiliaire (50B) s'ajoutant au courant de charge (26) dans le circuit inverseur (23) et contribuant à charger et/ou décharger les capacités parasites (65) des unités de commutation (35H, 35L, 36H, 36L) et favorisant ainsi le transfert du potentiel d'au moins l'un des nœuds en demi-pont (A, B) entre le potentiel positif (V+) et le potentiel négatif (V-) dans la phase transitoire (43),
dans lequel l'élément (40) de stockage d'énergie du circuit auxiliaire (37) comprend au moins une bobine d'induction (70) qui interconnecte les nœuds en demi-pont (A, B) respectifs de deux demi-ponts (29A, 29B) du circuit inverseur (23) et qui est conçu pour recevoir un courant (50A) de charge électrique provenant du circuit inverseur (23) dans le demi-cycle (42) respectif à des fins de charge en énergie, et qui est conçu pour générer le courant auxiliaire (50B) en induisant une tension à l'aide de l'énergie stockée,
**caractérisé en ce que**
l'au moins une bobine d'induction (70) du circuit auxiliaire comprend deux enroulements (73, 73') qui sont connectés en série entre les nœuds en demi-pont (A, B) du circuit inverseur (23) et une connexion électrique entre les deux enroulements (73, 73') comprend au moins un élément électrique et/ou électronique, dans lequel
a) la connexion électrique entre les deux enroulements (73, 73') est connectée à un potentiel de masse (75) par au moins une branche de circuit (77, 77') qui comprend un condensateur en Y (78, 78') respectif, et/ou
b) le circuit résonnant (21) est connecté au circuit inverseur (23) et au circuit auxiliaire (37) par l'intermédiaire d'un câble blindé (91) et un blindage électrique (92) du câble (91) est connecté au potentiel de masse (75) au niveau d'un point (99) de connexion à la masse qui se trouve à une distance (97) d'un point (98) de connexion à la masse du circuit auxiliaire (37), la distance (97) étant inférieure à 50 cm.

6. Dispositif (11) de transmission de puissance selon la revendication 5, dans lequel la branche de circuit (77, 77') respective comprend le condensateur en Y (78, 78') et le circuit auxiliaire (37) comprend une conception symétrique en ce qui concerne la connexion électrique résultante de chacun des nœuds en demi-pont (A, B) au potentiel de masse (75) et la conception symétrique comprend
• une seule branche de circuit (80) avec son condensateur en Y (78) ou
• un condensateur (71) de blocage de courant continu et deux branches de circuit (77, 77') ou
• une branche de circuit (80) et deux condensateurs (71, 71') de blocage de courant continu.

7. Dispositif (11) de transmission de puissance selon la revendication 5 ou 6, dans lequel la branche de circuit (77, 77') respective comprend le condensateur en Y (78, 78') et la branche de circuit respective comprend une résistance (81) pour limiter un courant à la masse et/ou amortir une oscillation du courant à la masse.

8. Dispositif (11) de transmission de puissance selon l'une quelconque des revendications 5 à 7, dans lequel les deux enroulements (73, 73') sont connectés électriquement en série et sont agencés sur un noyau ferromagnétique commun ou dans lequel les deux enroulements (73, 73') sont agencés sur des noyaux ferromagnétiques séparés.

9. Dispositif (11) de transmission de puissance selon l'une quelconque des revendications 5 à 8, dans lequel l'unité de commutation (35H, 35L, 36H, 36L) respective comprend au moins un transistor (60) et/ou au moins un thyristor et/ou l'élément (61) de roue libre respectif comprend au moins une diode, en particulier une diode de corps.
